Europäisches Patentamt

European Patent Office

Office européen des brevets

(11) Veröffentlichungsnummer: **0 295 523**
**A1**

## (12) EUROPÄISCHE PATENTANMELDUNG

(21) Anmeldenummer: 88108995.7

(22) Anmeldetag: 06.06.88

(51) Int. Cl.4: **G01T 1/29**

(30) Priorität: 15.06.87 DE 3720005

(43) Veröffentlichungstag der Anmeldung:
21.12.88 Patentblatt 88/51

(84) Benannte Vertragsstaaten:
BE DE FR IT NL

(71) Anmelder: **Siemens Aktiengesellschaft Berlin und München**
**Wittelsbacherplatz 2**
**D-8000 München 2(DE)**

(72) Erfinder: **Reinfelder, Hans-Erich, Dr.**
**Schuhstrasse 5**
**D-8520 Erlangen(DE)**

(54) **Röntgendiagnostikeinrichtung mit einem Speicherleuchtschirm.**

(57) Die Erfindung betrifft eine Röntgendiagnostikeinrichtung mit einem Speicherleuchtschirm (4) für die latente Speicherung des jeweiligen Röntgenstrahlenbildes, mit einer Auslesevorrichtung (5 bis 14), bei der zur Bildwiedergabe der Speicherleuchtschirm (4) durch einen Abtaststrahl (7) einer Strahlenquelle (5) zum Leuchten angeregt wird, mit einem Abbildungssystem (9) und einem Detektor (10) für das von dem Speicherleuchtschirm (4) emittierte Licht und mit einem Bildwiedergabesystem (12). Die Auslesevorrichtung (5 bis 14) enthält eine Steuervorrichtung (13), die eine Modulation der Intensität des Abtaststrahles (7) bewirkt, wobei der Abtaststrahl (7) impulsweise getaktet wird.

EP 0 295 523 A1

FIG 2

EP 0 295 523 A1

## Röntgendiagnostikeinrichtung mit einem Speicherleuchtschirm

Die Erfindung betrifft eine Röntgendiagnostikeinrichtung mit einem Speicherleuchtschirm für die latente Speicherung des jeweiligen Röntgenstrahlenbildes, mit einer Auslesevorrichtung, bei der zur Bildwiedergabe der Speicherleuchtschirm durch einen Abtaststrahl einer Strahlenquelle zum Leuchten angeregt wird, mit einem Abbildungssystem und einem Detektor für das von dem Speicherleuchtschirm emittierte Licht und mit einem Bildwiedergabesystem.

In der DE-PS 24 51 978 ist eine derartige Röntgendiagnostikeinrichtung beschrieben, bei der als strahlenempfindlicher Wandler ein Leuchtschirm aus einem Thermolumineszenz-Speicherleuchtstoff mit Röntgenstrahlen bestrahlt wird, so daß in ihm Defektelektronen erzeugt werden, die in Potentialfallen (Traps) mit höherem Energieniveau gespeichert werden. In einer Auslesevorrichtung wird dieser Speicherleuchtschirm von einer zusätzlichen Strahlenquelle, beispielsweise einem Laser, bildpunktweise abgetastet, so daß die in den Traps gespeicherten Elektronen angeregt werden und in niedrigere Energieniveaus zurückfallen können, wobei die Energiedifferenz in Form von Lichtquanten abgestrahlt wird. Dadurch ist es möglich, das derart gespeicherte Röntgenstrahlenbild aus dem Speicherleuchtschirm auszulesen.

Während der Abtastung einer Zeile durch den Laserstrahl wird das von dem Speicherleuchtschirm emittierte Licht durch einen optischen Kollektor erfaßt und auf der lichtempfindlichen Eingangsfläche eines Detektors abgebildet. Das Ausgangssignal des Detektors wird beispielsweise einer normalen Fernsehkette zur Wiedergabe des Röntgenbildes auf einem Monitor zugeführt.

Derartige Leuchtschirme mit einem Speicherleuchtstoff zeigen bei der Anregung mit einem Laserstrahl endliche An- und Abklingzeiten. Bei Verwendung beispielsweise eines aus Barium-Fluor-Halogenid bestehenden Speicherleuchtstoffes kann die Zeit 1 bis 2 $\mu$s dauern bis das stimulierte Lichtsignal seinen Maximalwert erreicht. Er kann eine Abklingzeit von ebenfalls 1 bis 2 $\mu$s aufweisen, bis nach Abschalten des Lasers bzw. nach weiterer Bewegung des Laserstrahls die Emission abgeklungen ist. Diese Anwortzeiten des Speicherleuchtstoffes führen zu einer Verschmierung der Bildinformation bei Abtastzeiten, die kleiner sind als die Summe der An- und Abfallzeiten. Näherungsweise kann das vom Detektor gemessene Signal S (T) durch die in folgender Formel gegebene Beziehung beschrieben werden:

$$S(T) = \frac{dn(T)}{dt} = a \int_{-\infty}^{T} n(t)\, I(t)\, e^{\lambda(t-T)}\, dt$$

wobei S(T) das Signal des stimulierten Lichtes, n(t) die Anzahl der stimulierbaren Traps, I(t) die Intensität des stimulierten Laserlichts, $\lambda$ die Zeitkonstante des Speicherleuchtstoffs und a eine Proportionalitätskonstante sind.

Der Speicherleuchtstoff wird dabei von einem Laserstrahl konstanter Intensität zeilenförmig abgetastet. Da die Detektion des stimulierten Lichtes keinerlei Ortsauflösung mehr besitzt, muß das gesamte erfaßte stimulierte Licht dem augenblicklichen Ort des Laserstrahles zugeordnet werden. Dabei treten durch die An- und Abklingzeiten Bildunschärfen auf, da ein Teil des von dem vorherigen Bildpunkt emittierten Lichtes dem Licht des aktuellen Bildpunkt überlagert ist, so daß dadurch ein Fehler entsteht. Eine die Auflösung wesentlich beeinträchtigende Bildunschärfe konnte bisher nur durch entsprechend langsames Abtasten vermieden werden.

Die Erfindung geht von der Aufgabe aus, eine Röntgendiagnostikeinrichtung der eingangs genannten Art zu schaffen, die es er möglicht, den Einfluß der Bildunschärfe erheblich zu reduzieren, so daß sehr - schnelle Abtastungen möglich sind.

Die Aufgabe wird erfindungsgemäß dadurch gelöst, daß die Auslesevorrichtung eine Steuervorrichtung enthält, die eine Modulation der Intensität des Abtaststrahles bewirkt. Dadurch werden auf dem Speicherleuchtschirm die Bildpunkte nacheinander und einzeln angeregt, so daß sich jeder Meßwert seinem zugehörigen Bildpunkt zuordnen läßt.

Es hat sich als vorteilhaft erwiesen, wenn die Steuervorrichtung derart ausgebildet ist, daß der Abtaststrahl während einer ersten Zeitspanne t1 mit maximaler Helligkeit auf dem Speicherleuchtschirm auftrifft und während einer zweiten Zeitspanne t2 vollständig unterbrochen ist. Die Meßzeiten für die einzelnen Bildpunkte lassen sich noch weiter reduzieren, wenn dem Detektor ein Rechner nachgeschaltet ist, wenn der Detektor während der Dunkelphase in der Zeitspanne t2 die Nachleuchtintensität des stimulierten Lichtes als ersten Meßwert und in der darauffolgenden Helligkeitsphase in der Zeitspanne t1 das Summenstimulationssignal als zweiten Meßwert dem Rechner zuführt und wenn der Rechner die

2

gewichtete Differenz beider Meßwerte ermittelt. Dadurch lassen sich die durch die An- bzw. Abklingzeiten hervorgerufene Beeinflussung der Bildpunkte auch dann eliminieren, wenn die Meßzeit für die einzelnen Bildpunkte so klein ist, daß das während der An- und Abklingzeit emittierte Licht die Messung beeinflußt.

Es hat sich als vorteilhaft erwiesen, wenn als Strahlenquelle ein Laser verwendet wird. Die Intensität des Laserlichtes läßt sich direkt modulieren, wenn die Steuervorrichtung mit der Strahlenquelle verbunden ist. Es läßt sich jede beliebige Strahlenquelle verwenden, wenn ihr ein Modulator vorgeschaltet ist, der mit der Steuervorrichtung verbunden ist, so daß er die Strahlenintensität beeinflußt.

Die Erfindung ist nachfolgend anhand eines in der Zeichnung dargestellten Ausführungsbeispieles näher erläutert. Es zeigen:

Fig. 1 den Aufnahmeteil einer Röntgendiagnostikeinrichtung,
Fig. 2 den Wiedergabeteil einer erfindungsgemäßen Röntgendiagnostikeinrichtung und
Fig. 3 eine Kurve zur Darstellung der Steuerung des Abtaststrahles.

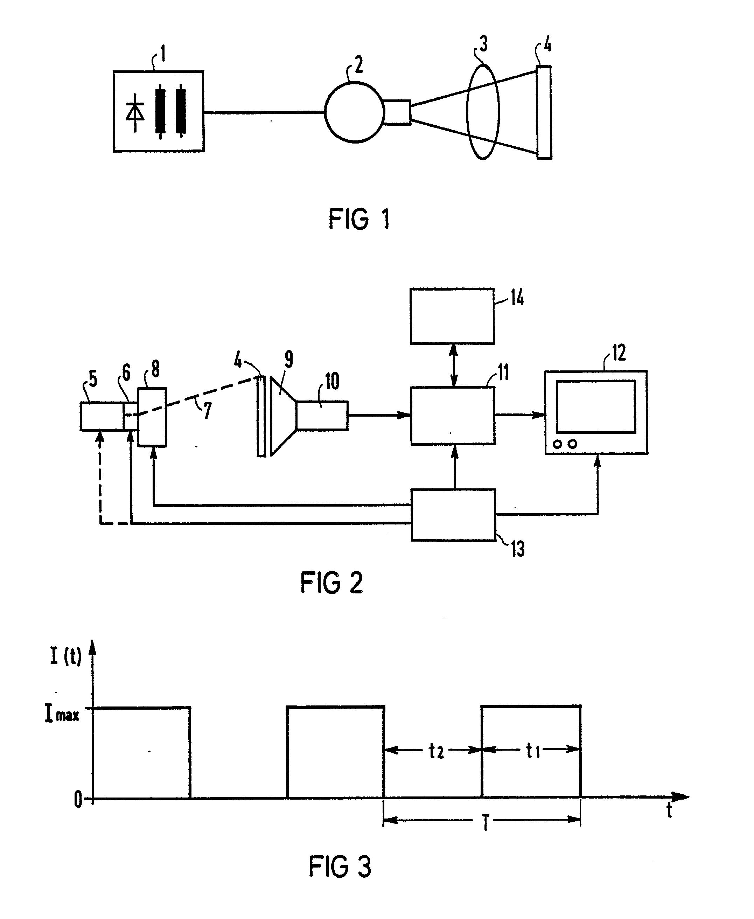

In der Fig. 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4, wie bereits beschrieben, Defektelektronen, die in einer Potentialfalle des Leuchtstoffes gespeichert werden, so daß in dem Speicherleuchtschirm 4 ein latentes Bild gespeichert ist.

Zur Wiedergabe des latenten, gespeicherten Bildes wird, wie in Fig. 2 dargestellt, der Speicherleuchtschirm durch eine Strahlenquelle, beispielsweise einen Laser 5 angeregt. Dem Laser 5 kann ein Modulator 6 vorgeordnet sein, der den vom Laser 5 ausgehenden Laserstrahl 7 in seiner Intensität moduliert. Dem Modulator 6 ist eine Ablenkvorrichtung 8 vorgeschaltet, die den Abtaststrahl 7 zeilenweise über den Speicherleuchtschirm 4 ablenkt. Die Ablenkvorrichtung 8 für den Abtastsrahl 7 kann beispielsweise aus einem Ablenkspiegel für die vertikale und einem elektrooptischen Strahlenablenker für die horizontale Ablenkung bestehen. Es kann aber auch durch die Ablenkvorrichtung 8 eine zeilenweise Ablenkung erfolgen, wenn gleichzeitig der Speicherleuchtschirm 4 in Spaltenrichtung schrittweise weiterbewegt wird. Ein Lichtleiter 9 erfaßt das von dem Speicherleuchtschirm 4 emittierte Licht und leitet es auf einen Detektor 10, der die Helligkeit der abgetasteten Bildpunkte erfaßt und in ein elektrisches Signal umwandelt, das einer Wiedergabeschaltung 11 zugeführt wird, die aus den einzelnen analogen Ausgangssignalen des Detektors 10 ein Videosignal zur Darstellung auf einem Monitor 12 erzeugt. Eine Steuereinrichtung 13 bewirkt bei der Wiedergabe die Steuerung des Modulators 6 und die Synchronisation der Ablenkvorrichtung 8, der Wiedergabeschaltung 11 und des Monitors 12. Die Wiedergabeschaltung kann in bekannter Weise Bildspeicher, eine Verarbeitungsschaltung und Wandler aufweisen.

Bei Verwendung eines in seiner Intensität modulierbaren Lasers 5, beispielsweise einer Laserdiode, kann die Steuervorrichtung 13 auch direkt mit dem Laser 5 verbunden sein, die dessen Abtaststrahl 7 direkt moduliert. Dafür kann der nachgeordnete Modulator 6 entfallen.

In Fig. 3 ist die Strahlenintensität I(t) des Abtaststrahls 7 über der Zeit t aufgetragen. In diesem Beispiel wird der Laser 5 impulsweise getaktet, wobei die Intensität in einer ersten Zeitspanne t1 mit seiner maximalen Intensität leuchtet und in einer zweiten Zeitspanne t2 der Abtaststrahl 7 vollständig unterbrochen ist. Das bedeutet aber, daß der Speicherleuchtschirm 4 impulsweise abgetastet wird. Da gleichzeitig die Ablenkvorrichtung 8 den Abtaststrahl 7 weiterhin über den Speicherleuchtschirm 4 ablenkt, werden nacheinander diskrete Bildpunkte auf dem Speicherleuchtschirm 4 zum Leuchten angeregt. Ist die Meßzeit T für einen Bildpunkt größer als die An- und Abklingdauer des verwendeten Speicherleuchtstoffes, so läßt sich das Ausgangssignal direkt einem Bildpunkt im Röntgenbild zuordnen. Liegt dagegen die Meßzeit T pro Bildpunkt unterhalb der An- und Abklingdauer des verwendeten Speicherleuchtstoffes, so kann mittels eines an der Wiedergabeschaltung 11 angeschlossenen Rechners 14 entweder auf analoger oder digitaler Basis die Berechnung des wirklichen Stimulationssignales durch Messungen des emittierten Lichtes während der Dunkel- und der Hellphase des Abtaststrahles 7 erfolgen.

Während der Dunkelphase des Abtaststrahles 7 in der Zeitspanne t2 wird die Nachleuchtintensität des stimulierten Lichtes gemessen. In der darauffolgenden Meßzeit t1 wird das Summenstimulationssignal gemessen. Durch eine gewichtete Differenz aus beiden Meßwerten erhält man bei gleichgroßen Meßzeiten t1 = t2 beispielsweise nach folgender Formel das wahre Stimulationssignal für diesen Bildpunkt:

$$M(T) = S_1 - \frac{S_2 S_2}{S_0} = a \, I_{max} \int_0^{t_1} n(t+T+t_2) \, e^{\lambda(t-t_1)} \, dt,$$

$$\text{wobei } S_0(T) = a \int_{-\infty}^{T} n(t) \, I(t) \, e^{\lambda(t-T)} \, dt$$

$$S_2(T+t_2) = a \int_{-\infty}^{T+t_2} n(t) \, I(t) \, e^{\lambda(t-T-t_2)} \, dt$$

$$S_1(T+t_2+t_1) = a \int_{-\infty}^{T+t_2+t_1} n(t) \, I(t) \, e^{\lambda(t-T-t_2-t_1)} \, dt$$

Durch diese Berechnung werden die das Stimulationssignal verfälschenden Anteile des An- und Abklingvorganges eliminiert. Dadurch ist es möglich, eine sehr schnelle Bildauslesung durchzuführen, wobei keine die Bildschärfe beeinträchtigenden Einflüsse mehr vorhanden sind. Dies läßt sich insbesondere bei der Verwendung von Laserdioden als Laser 5 durchführen, da hier einerseits die Modulation des Lasers sehr einfach gestaltet werden kann, und andererseits die Laserleistung durch den Pulsbetrieb nicht gemindert wird.

Um trotz der kurzen Meßzeit t1 noch entstehende Bildunschärfen, hervorgerufen durch die Bewegung des Abtaststrahles 7, zu eliminieren, läßt sich die Ablenkvorrichtung 8 derart steuern, daß der Abtaststrahl 7 nur in den Dunkelphasen zum nächsten Bildpunkt bewegt wird. Dadurch steht der Abtaststrahl 7 während der eigentlichen Messung des emittierten Lichtes in der Meßzeit t1 unbeweglich auf dem Speicherleuchtschirm 4.

Um die Auflösung weiterhin zu erhöhen bzw. die Energieausbeute des Speicherleuchtschirmes 4 besser zu nutzen, kann der Speicherleuchtschirm 4 ein zweites Mal ausgelesen werden, wobei darauf geachtet wird, daß der Takt derart versetzt ist, daß der auf den Speicherleuchtschirm 4 auftreffende Abtaststrahl 7 auf die bisher unbeleuchteten Stellen zwischen den bereits abgetasteten Bildpunkten auftrifft. Diese zweite Abtastung kann als zusätzlicher Bildpunkt die Auflösung verbessern. Sie kann aber auch beispielsweise durch Addition oder Mittelwertbildung mit den Bildpunkten der ersten Abtastung überlagert werden, so daß ein größerer Rauschabstand erzielt wird.

## Ansprüche

1. Röntgendiagnostikeinrichtung mit einem Speicherleuchtschirm (4) für die latente Speicherung des jeweiligen Röntgenstrahlenbildes, mit einer Auslesevorrichtung (5 bis 14), bei der zur Bildwiedergabe der Speicherleuchtschirm (4) durch einen Abtaststrahl (7) einer Strahlenquelle (5) zum Leuchten angeregt wird, mit einem Abbildungssystem (9) und einem Detektor (10) für das von dem Speicherleuchtschirm (4) emittierte Licht und mit einem Bildwiedergabesystem (12), **dadurch gekennzeichnet,** daß die Auslesevorrichtung (5 bis 14) eine Steuervorrichtung (13) enthält, die eine Modulation der Intensität des Abtaststrahles (7) bewirkt.

2. Röntgendiagnostikeinrichtung nach Anspruch 1, **dadurch gekennzeichnet,** daß die Steuervorrichtung (13) derart ausgebildet ist, daß der Abtaststrahl (7) während einer ersten Zeitspanne (t1) mit maximaler Helligkeit auf dem Speicherleuchtschirm (4) auftrifft und während einer zweiten Zeitspanne (t2) vollständig unterbrochen ist.

3. Röntgendiagnostikeinrichtung nach Anspruch 1 oder 2, **dadurch gekennzeichnet,** daß dem Detektor (10) ein Rechner (14) nachgeschaltet ist, daß der Detektor (10) während der Dunkelphase in der Zeitspanne (t2) die Nachleuchtintensität des stimulierten Lichtes als ersten Meßwert und in der darauffolgenden Helligkeitsphase in der Zeitspanne (t1) das Summenstimulationssignal als zweiten Meßwert dem Rechner (14) zugeführt und daß der Rechner (14) die gewichtete Differenz beider Meßwerte ermittelt.

4. Röntgendiagnostikeinrichtung nach einem der Ansprüche 1 bis 3, **dadurch gekennzeichnet,** daß als Strahlenquelle (5) ein Laser verwendet wird.

5. Röntgendiagnostikeinrichtung nach einem der Ansprüche 1 bis 4, **dadurch gekennzeichnet,** daß die Steuervorrichtung (13) mit der Strahlenquelle (5) verbunden ist.

6. Röntgendiagnostikeinrichtung nach einem der Ansprüche 1 bis 4, **dadurch gekennzeichnet,** daß der Strahlenquelle (5) ein Modulator (6) vorgeschaltet ist, der mit der Steuervorrichtung (13) verbunden ist.

87 P 3201

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 148 410 (FUJI PHOTO FILM CO., LTD)<br>* Zusammenfassung; Seite 6, Zeilen 8-20; Seite 8, Zeilen 8-21; Seite 9, Zeilen 15-22; Seite 10, Zeilen 2,3; Figuren *<br>--- | 1,4,5,6 | G 01 T 1/29 |
| A | EP-A-0 111 278 (FUJI PHOTO FILM CO., LTD)<br>* Seite 3, Zeile 7 - Seite 4, Zeile 14; Seite 8, Zeilen 19-22; Figuren *<br>--- | 1,4 | |
| A | US-A-3 412 248 (KASTNER et al.)<br>* Zusammenfassung; Spalte 1, Zeilen 44-68; Spalte 2, Zeilen 19-24 *<br>----- | 2-4 | |
| | | | **RECHERCHIERTE SACHGEBIETE (Int. Cl.4)**<br><br>G 01 T<br>H 04 N |

Der vorliegende Recherchenbericht wurde für alle Patentansprüche erstellt

| Recherchenort | Abschlußdatum der Recherche | Prüfer |
|---|---|---|
| DEN HAAG | 06-09-1988 | DATTA S. |